(19)

Europäisches
Patentamt
European
Patent Office
Office européen
des brevets

(11) **EP 2 626 835 A1**

(12) **EUROPEAN PATENT APPLICATION**

(43) Date of publication:
**14.08.2013 Bulletin 2013/33**

(51) Int Cl.:
*G06T 7/20* (2006.01)

(21) Application number: **13154693.9**

(22) Date of filing: **08.02.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **08.02.2012 KR 20120012721**

(71) Applicant: **Samsung Electronics Co., Ltd
Gyeonggi-do 443-742 (KR)**

(72) Inventor: **Kang, Woo-Sung
443-742 Gyeonggi-do (KR)**

(74) Representative: **Grünecker, Kinkeldey,
Stockmair & Schwanhäusser
Leopoldstrasse 4
80802 München (DE)**

(54) **Object tracking apparatus and control method thereof**

(57)     A control method of an object tracking apparatus for tracking a target tracking-object includes receiving a first frame including the target tracking-object distinguishing between a target tracking-object including the target tracking-object and a background in the first frame, generating histograms of color values for the target tracking-object and the background, comparing the histograms corresponding to the target tracking-object and the background to determine reliable data of the target tracking-object and reliable data of the background, and estimating a next position of the target tracking-object in a second frame based on the reliable data of the target tracking-object and the background.

FIG.1

EP 2 626 835 A1

**Description**

**BACKGROUND OF THE INVENTION**

1. Field of the Invention

The present invention relates generally to an object tracking apparatus and a control method thereof, and more particularly, to an object tracking apparatus capable of tracking a target tracking-object when the target tracking-object is hidden and a control method thereof.

2. Description of the Related Art

With the progression in security related technology developments, object tracking related methods, which is one of the associated fields in security related technology, are being actively developed. In a case where a plurality of photographed frames are input, when a target tracking-object is detected from a particular frame, the object tracking related technology is configured to determine a position of the target tracking-object in a frame after the particular frame. That is, the target tracking-object is detected in one frame without being detected in each of the plurality of frames every time, and then the target tracking-object is tracked in frames after the one frame based on a predetermined criterion.

As described above, a configuration of detecting the target tracking-object in each of the plurality of frames every time increases processing amount, making it difficult to track the target tracking-object in real time. Accordingly, a technology of a tracking method of reducing the processing amount is needed.

One conventional tracking method, particularly, an adaptive object tracking algorithm periodically updates the target tracking-object when the target tracking-object is changed by illumination, size, or rotation. Changes in the target tracking-object are reflected by calculating a weight sum of a histogram acquired from a past target tracking-object and a histogram acquired from a current target tracking-object.

In most cases, since the target tracking-object is not suddenly changed, the sum may be calculated by assigning much more weight to a past model. Further, when the currently acquired histogram has a lot of differences from the past histogram through comparison, a method of assigning a high weight to a current model is used, so that the tracking is possible even when a color of the object is suddenly changed.

However, the tracking method according to the conventional technology does not consider the case where the target tracking-object is hidden by a background of the frame or another object in a process of tracking the target tracking-object. Particularly, when the target tracking-object is completely hidden by another object, the conventional tracking method instead recognizes another object as the target tracking-object, resulting in a high probability that another object is tracked, instead of the original target tracking-object.

**SUMMARY OF THE INVENTION**

Accordingly, an aspect of the present invention is to solve the above-mentioned problems occurring in the prior art, and to provide at least the advantages below. According to an aspect of the present invention, an object tracking apparatus is provided, capable of tracking a target tracking-object without an error when the target tracking-object is hidden by another object, and a control method thereof.

According to an aspect of the present invention, a control method of an object tracking apparatus for tracking a target tracking-object is provided. The control method includes receiving a first frame including the target tracking-object, distinguishing between a target tracking-object including the target tracking-object and a background in the first frame, generating histograms of color values for the target tracking-object and the background, comparing the histograms corresponding to the target tracking-object and the background to determine reliable data of the target tracking-object and reliable data of the background, and estimating a next position of the target tracking-object in a second frame based on the reliable data of the target tracking-object and the background. According to another aspect of the present invention, an object tracking apparatus for tracking a target tracking-object is provided. The object tracking apparatus includes a photographing unit for photographing a first frame including the target tracking-object and a second frame, and a controller for distinguishing between a target tracking-object including the target tracking-object and a background in the first frame, generating histograms of color values for the target tracking-object and the background, comparing the histograms corresponding to the target tracking-object and the background to determine reliable data of the target tracking-object and reliable data of the background, and estimating a next position of the target tracking-object in the second frame based on the reliable data of the target tracking-object and the background.

## BRIEF DESCRIPTION OF THE DRAWINGS

The above and other aspects, features and advantages of various embodiments of the present invention will be more apparent from the following description taken in conjunction with the accompanying drawings, in which:

FIG. 1 is a flowchart illustrating a control method of an object tracking apparatus, according to an embodiment of the present invention;

FIG. 2A is a diagram illustrating a target tracking-object template, according to an embodiment of the present invention;

FIG. 2B is a diagram illustrating an example of applying a particle filter, according to an embodiment of the present invention;

FIG. 3A is a diagram illustrating a case where a target tracking-object is hidden, according to an embodiment of the present invention;

FIG. 3B is a diagram illustrating an expansion of a search area, according to an embodiment of the present invention;

FIG. 4 is a block diagram illustrating an object tracking apparatus, according to an embodiment of the present invention;

FIG. 5 is a flowchart illustrating a method of distinguishing a target tracking-object using a histogram, according to an embodiment of the present invention;

FIG. 6 is a diagram illustrating a relation between a target tracking-object and a target tracking-object, according to an embodiment of the present invention;

FIGs. 7A to 7C are diagrams illustrating histogram data of a histogram equation, according to an embodiment of the present invention;

FIG. 8A illustrates a diagram illustrating a histogram of a target tracking-object and a background in an R channel, and FIG. 8B illustrates histograms in G and B channels, according to an embodiment of the present invention;

FIG. 9 is a flowchart illustrating a control method when an object tracking apparatus determines histograms in R, G, and B channels, according to an embodiment of the present invention;

FIG. 10 is a diagram illustrating a process of iteratively selecting reliable data by an object tracking apparatus and a classification result thereof, according to an embodiment of the present invention;

FIG. 11 is a diagram illustrating a Variance Ratio (VR) value corresponding to each diagram of FIG. 10, according to an embodiment of the present invention; and

FIG. 12 is a diagram illustrating a code for iteratively selecting reliable data, according to an embodiment of the present invention.

## DETAILED DESCRIPTION OF EMBODIMENTS OF THE PRESENT INVENTION

Hereinafter, various embodiments of the present invention are described with reference to the accompanying drawings. In the following description, the same drawing reference numerals refer to the same elements, features and structures throughout the drawings. Further, detailed description of known functions and configurations are omitted to avoid obscuring the subject matter of the present invention.

According to an aspect of the present invention, there is provided an object tracking apparatus capable of tracking a target tracking-object without an error when the target tracking-object is hidden by another object, and a control method thereof.

Specifically, according to an aspect of the present invention, there is provided an object tracking apparatus and method which avoids learning of another object, instead of the target tracking-object, by determining a hiding degree of the target tracking-object to decide a learning timing and makes it possible to minimize error during the tracking process by excluding background information included in the target tracking-object as much as possible.

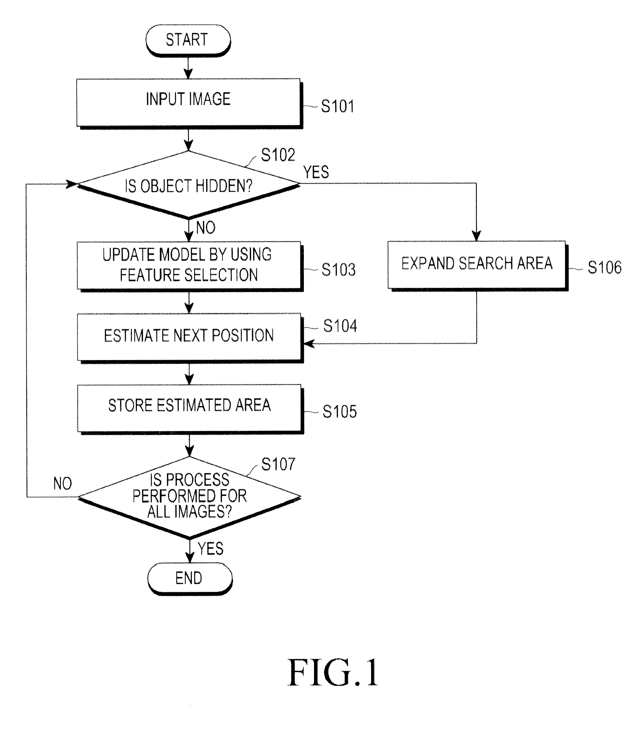

FIG. 1 is a flowchart illustrating a control method of an object tracking apparatus according to an embodiment of the present invention.

The object tracking apparatus receives an image in Step S101. Here, the image includes a plurality of frames. The plurality of frames are consecutive frames photographed with the progression of time, and each frame includes a target tracking-object. Further, each frame includes other objects other than the target tracking-object, and objects other than the target tracking-object are commonly referred to as background. Some frames of the plurality of frames do not include the target tracking-object. For example, when the target tracking-object is hidden by another object included in the background, the target tracking-object may not be included in a particular frame.

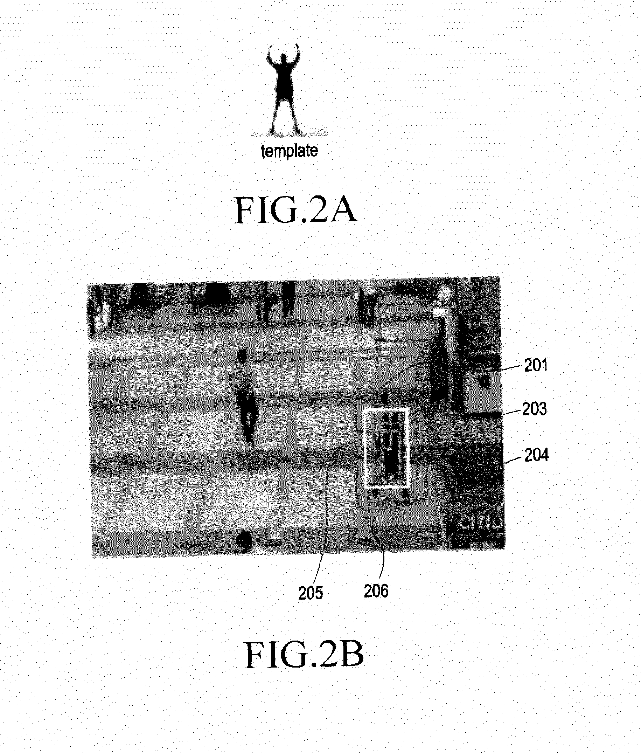

The object tracking apparatus determines whether the target tracking-object is hidden in the particular frame in Step S102. More specifically, the object tracking apparatus distinguishes between the target tracking-object and the background in the particular frame. FIG. 2A is a target tracking-object template. The object tracking apparatus pre-stores a target tracking-object template and distinguish the target tracking-object from the background in the particular frame based on the read target tracking-object template. The object tracking apparatus generates the target tracking-object template, which will be described below in more detail.

The object tracking apparatus generates a histogram of the distinguished target tracking-object and background in the particular frame. Here, for example, the histogram is configured by statistics, such as RGB pixel values, and it will be easily understood by those skilled in the art that there is no limitation as long as the criterion can express a characteristic of the particular frame.

The object tracking apparatus may apply a particle filter as illustrated in FIG. 2B to the particular frame. Then, the object tracking apparatus may search for the target tracking-object by determining the target tracking-object as a starting point 203 and generating a plurality of sub search areas 201, 204, 205, and 206 in a predetermined search area around the starting point 203 as illustrated in FIG. 2B.

The object tracking apparatus estimates a next position of the target tracking-object by applying the particle filter to a frame after the particular frame. Particularly, the object tracking apparatus according to the present invention my use an x axis, a y axis, and horizontal and vertical lengths of a window as a state for the tracking. The state is indicated by $X_k=[x_k,y_k,w_k,h_k]^T$, and a dynamics model of the state is expressed as defined in Equation (1).

$$X_{k+1} = X_k + W_k C_k, \quad W_k \sim N(0,I),$$
$$C_k = (E_n[|x_k - x_{k-1}|] \quad E_n[|y_k - y_{k-1}|] \quad \sigma_w^2 \quad \sigma_h^2)^T. \quad \ldots\ldots\ldots(1)$$

In Equation (1), $X_{k+1}$ is a next state of a $k^{th}$ state. Further, $W_k$ is a normal distribution. In addition, $E_n[|r_k - r_{k-1}|]$ denotes an average speed of the target tracking-object in an x axis direction acquired from previous n frames, $E_n[|y_k - y_{k-1}|]$ denotes an average speed of the target tracking-object in a y axis direction acquired from previous n frames. $\sigma_w^2$

denotes variation of a horizontal length of the window. $\sigma_h^2$ denotes variation of a vertical length of the window.

In order to approximate a probability value $\pi_k$ or the state $X_k$, the object tracking apparatus may use a weighted log likelihood image (WLI) determined by $R_t(I)$. Here, $R_t(I)$ is a sum of weighted likelihood, which will be described below in more detail.

An area which is defined by the state $X_k$ is named $A(X_k)$, and the WLI is acquired by calculating the $R_t(I)$ of all pixels. Here, the WLI is expressed as defined in Equation (2).

$$\{R_t(b(\mathbf{u})\}_{\mathbf{u} \in A(X_k)} \quad \ldots\ldots\ldots\ldots\ldots(2)$$

When it is assumed that M particles $\{X_k^m, \pi_k^m\}_{m=1}^M$ are given, a probability of a state $X_k^m$ is determined by Equations (3) and (4).

$$r_k^m = \frac{1}{1 + \exp(-a\sum_{\mathbf{u} \in A(X_k^m)} R_t(b(\mathbf{u}))} \quad \ldots\ldots\ldots\ldots (3)$$

$$\pi_k^m = \frac{r_k^m}{\sum_{m=1}^{M} r_k^m}$$

$$\dots\dots\dots\dots (4)$$

In Equations (3) and (4), a denotes a parameter which may control variation of a discrete probability $\pi_k^m$.

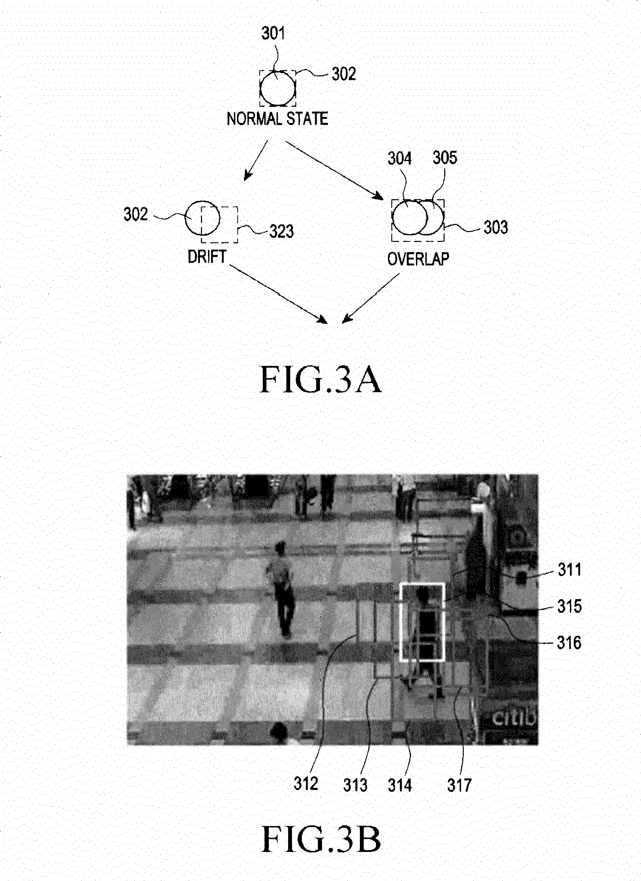

When a sum of the weighted likelihood values $R_t(I)$ includes a plurality of negative values, the object tracking apparatus determines that the target tracking-object is hidden or drifted in Step S102-Y. FIG. 3A is a diagram illustrating the case where the target tracking-object is hidden.

As illustrated in FIG. 3A, a target tracking-object 301 is identified and included within a particle 302 in a normal state. However, when a part of the target tracking-object 302 is disposed outside a particle 323, a drift is generated. Further, a target tracking-object 305 overlaps another object 304, and a particle 303 includes the target tracking-object 305 and another object 304 all at once.

When the target tracking-object is drifted or overlaps, the sum of the weighted likelihood values includes a plurality of negative values, and the object tracking apparatus determines whether the target tracking-object overlaps by identifying the sum of the weighted likelihood values in step 102.

When it is identified that the target tracking-object overlaps by identifying the sum of the weighted likelihood values in Step S102-Y, the object tracking apparatus may expand a search area of the particle in Step S106. FIG. 3B is a diagram illustrating the expansion of the search area.

The particles 311 to 317 illustrated in FIG. 3B are identified as expanded, through a comparison with the search area by the particles 201 to 206 of FIG. 2B.

The object tracking apparatus estimates a next position of the target tracking-object by applying the particle filter to the expanded search area in Step S104.

When it is determined that the target tracking-object is not hidden in Step S102-N, the object tracking apparatus updates reliable data of the target tracking-object in Step S103, which will be described below in more detail.

The object tracking apparatus updates a target tracking-object template and estimate a next position of the target tracking-object in Step S104. Here, the object tracking apparatus estimates the target tracking-object by applying the particle filter, which is the same as the description of FIG. 2B.

As described above, with respect to both cases where the target tracking-object is hidden and is not hidden, the object tracking apparatus estimates the next position and stores the estimated area in Step S105. The object tracking apparatus may iterate the above-described process for all frames of the image in Step S107.

As described above, the object tracking apparatus according to the present invention may effectively track the target tracking-object when the target tracking-object is hidden.

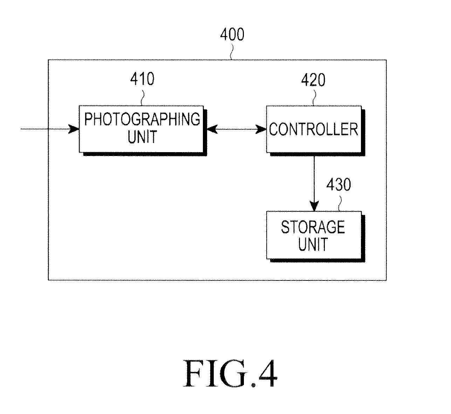

FIG. 4 is a block diagram of the object tracking apparatus according to an embodiment of the present invention.

As illustrated in FIG. 4, an object tracking apparatus 400 includes a photographing unit 410, a controller 420, and a storage unit 430.

The photographing unit 410 photographs a frame including the target tracking-object and the background under a control of the controller 420. The photographing unit 410 photographs a plurality of frames for a preset period, and may name the plurality of photographed frames an image. The photographing unit 410 photographs a fixed area, or photographs a variable area in real time according to a control of the controller 420. For example, the photographing unit 410 includes a PZT camera, and photographs a particular area through panning, zooming, and tilting under a control of the controller 420. The photographing unit 410 includes a photographing module such as CMOS, CCD or the like, but is not limited thereto, and alternatively may include other modules, as long as the photographing unit is a means capable of photographing the fixed or variable area under a control of the controller 420.

The controller 420 determines whether the target tracking-object is hidden in one frame of an input image. More specifically, the controller 420 distinguishes the target tracking-object from the background in the one frame. The controller 420 distinguishes the target tracking-object from the background based on the target tracking-object template read from the storage unit 430.

For the target tracking-object and the background, the controller 420 generates a histogram based on, for example, an RGB color coordinate. Further, the controller 420 determines whether the target tracking-object is hidden based on the sum of the weighted likelihood.

As described above, since the description that the controller 420 determines whether the target tracking-object is hidden has been made with reference to FIG. 1 in detail, further description thereof will be omitted herein.

The controller 420 may apply the particle filter during a process of estimating a next position of the target tracking-object. When it is determined that the target tracking-object is hidden, the controller 420 estimates the next position of the target tracking-object by expanding a search area of the particle filter.

Further, when it is determined that the target tracking-object is not hidden, the controller 420 updates the target tracking-object template in the storage unit 430 by using a feature determination. In addition, after estimating the next position of the target tracking-object, the controller 420 may store the estimated area in the storage unit 430.

For one frame, the controller 420 distinguishes the target tracking-object, estimates the next position, and stores the estimated area. For a next frame, the controller 420 may also distinguish the target tracking-object, estimate the next position, and store the estimated area. The controller 420 may iterate the above-described process for all frames of the image.

For example, the controller 420 may control a photographing area of the photographing unit 410 based on information related to the estimated area of the next position. Accordingly, it is possible to create an effect of photographing the target tracking-object while tracking the target tracking-object even when the target tracking-object escapes from the fixed area.

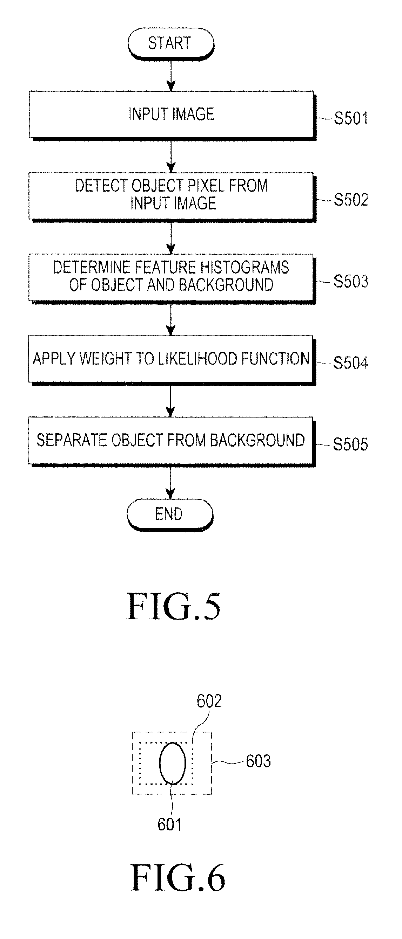

FIG. 5 is a flowchart illustrating a method of distinguishing the target tracking-object using a histogram according to an embodiment of the present invention.

The object tracking apparatus receives an image in Step S501. The object tracking apparatus detects a pixel of the target tracking-object in one frame of the input image in Step S502. The object tracking apparatus detects the pixel of the target tracking-object based on a target tracking-object template. However, in order to detect whether the target tracking-object is hidden, a window having a rectangular shape, which includes a target tracking-object, is detected as the target tracking-object.

FIG. 6 is a diagram illustrating a relation between the target tracking-object and the target tracking-object. FIG. 6 includes a target tracking-object 601 within one frame 603.

However, as described above, in order to determine whether the target tracking-object is hidden, the object tracking apparatus determines the rectangular window including the target tracking-object 601 as a target tracking-object 602. An external part of the target tracking-object 602 is determined as the background.

The object tracking apparatus determines a feature histogram for each of the target tracking-object and the background. For example, the object tracking apparatus determines histogram data of the target tracking-object and the background as illustrated in FIG. 5.

$$O = \{a,a,a,a,b,b,b,c,d,d,d,d\}$$
$$B = \{a,a,b,b,b,b,b,c,d,d,e\} \qquad \dots\dots\dots\dots(5)$$

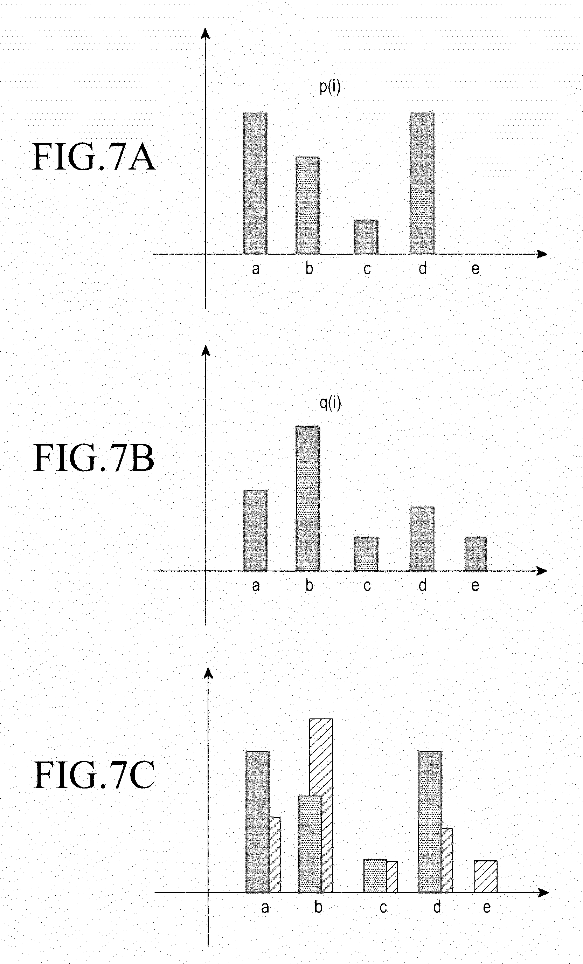

In Equation (5), O denotes histogram data of the target tracking-object, and B denotes histogram data of the background. Further, FIGs. 7A and 7B are diagrams illustrating the histogram data of Equation (5). FIG. 7A illustrates a histogram of the target tracking-object, identifying that there are four degrees in a bin of a, three degrees in a bin of b, one degree in a bin of c, four degrees in a bin of d, and zero degrees in a bin of e. FIG. 7B illustrates a histogram of the background, identifying that there are two degrees in a bin of a, five degrees in a bin of b, one degree in a bin of c, two degrees in a bin of d, and one degree in a bin of e.

The object tracking apparatus determines reliable data which may represent the target tracking-object and the background. For example, the object tracking apparatus determines the reliable data for the target tracking-object and the background based on Equations (6) and (7).

$$L(i) = \log \frac{\max[p(i),\delta]}{\max[q(i),\delta]} \qquad \dots\dots\dots\dots (6)$$

In Equation (6), p(i) denotes an $i^{th}$ bin of the target tracking-object, and q(i) denotes a $i^{th}$ bin of the background. Further, $\delta$ is a random value, which may serve to prevent a value within a log function from being "0".

$$\text{Trust Data of } O = \{i \mid L(i) > 0 \text{ and } i \in O\}$$
$$\text{Trust Data of } B = \{i \mid L(i) < 0 \text{ and } i \in B\} \qquad \dots\dots\dots\dots (7)$$

In determining the reliable data of the target tracking-object, the object tracking apparatus determines a case where a particular bin is included in a bin set of the target tracking-object and an application result of a log likelihood function by Equation (6) is larger than "0" as the reliable data of the target tracking-object. Further, in determining the reliable data of the background, the object tracking apparatus determines a case where the particular bin is included in the bin set of the target tracking-object and the application result of the log likelihood function by Equation (6) is smaller than "0" as the reliable data of the target tracking-object.

The reliable data for each of the target tracking-object and the background determined by Equations (6) and (7) are determined as Equation (8).

$$\text{Trust Data of } O = \{a, d\}$$
$$\text{Trust Data of } B = \{b, e\} \qquad \dots\dots\dots\dots\dots (8)$$

FIG. 7C illustrates histograms including both histograms of FIGs. 7A and 7B. FIG. 7C may describe a process of determining the reliable data of each of the target tracking-object and the background. In FIG. 7C, bins of a and d where the target tracking-object has a higher degree is determined as reliable data of the target tracking-object, and bins of b and e where the background has a higher degree is determined as reliable data of the background.

The object tracking apparatus may track the target tracking-object based on each of the reliable data. That is, the object tracking apparatus determines similarity with a candidate of the target tracking-object in a next frame by using the reliable data of the target tracking-object in a previous frame. The target tracking-object is determined by a method of applying the particle filter.

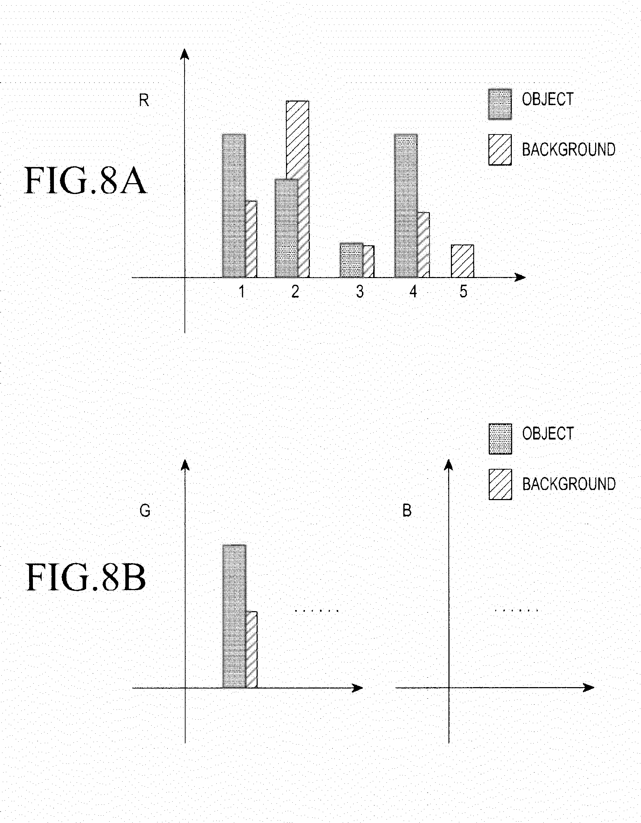

The object tracking apparatus, according to an embodiment of the present invention, determines a histogram for each of RGB channels as illustrated in FIGs. 8A and 8B. FIG. 8A is a histogram for the target tracking-object and the background in an R channel, and FIG. 8B are histograms in G and B channels.

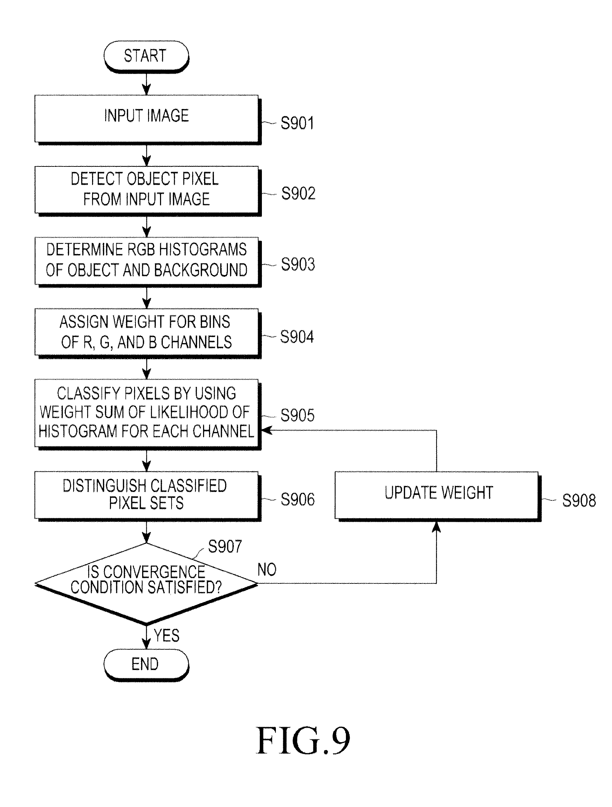

In determining the histogram in each of the R, G, and B channels, the object tracking apparatus assigns weight to each of the channels. FIG. 9 is a flowchart of a control method when the object tracking apparatus determines histograms in R, G, and B channels.

The object tracking apparatus receives an image in Step S901. The object tracking apparatus detects a target tracking-object in a particular frame of the image in Step S902. The object tracking apparatus determines a histogram in each of the R, G, and B channels for the object and the background in Step S903. The histogram determined in each of the R, G, and B channels are as illustrated in FIGs. 8A and 8B. The target tracking-object and the background for each color channel are distinguished by Equation (9).

$$L_t^c(i^c) = \log \frac{\max[p_t^c(i), \delta]}{\max[q(i)_t^c, \delta]} \qquad \dots\dots\dots\dots\dots (9)$$

In Equation (9), $\delta$ may be, for example, 0.001. A superscript c corresponds to R, G, and B colors, and a subscript t refers to reliable data. When a value of Equation (9) is a positive number, the target tracking-object is determined. When the value of Equation (9) is a negative number, the background is determined.

The object tracking apparatus assigns weight according to a classification capability to each of three histogram bins of the R, G, and B channels in Step S904. The object tracking apparatus assigns low weight to a bin of the histogram where the target tracking-object is determined as the background or the background is determined as the target tracking-object. Further, the object tracking apparatus assigns a high weight to a bin of the histogram where the target tracking-object is determined as the target tracking-object or the background is determined as the background. Equation (10) defines a bin error rate reflecting the above described matter.

$$e_t^c(i^c) = \frac{n_t^{wrong}(i^c)}{n_t(i^c)} \qquad \dots\dots\dots\dots\dots(10)$$

In Equation (10), $n_t^{wrong}$ denotes the number of pixels misclassified by a bin $i^c$, and $n_t(i^c)$ denotes the number of pixels tested by the bin $i^c$.

The weight is expressed as Equations (11) and (12) based on the error rate of Equation (10).

$$\tilde{w}_t^c(i^c) = \frac{1 - e_t^c(i^c)}{\sum_c \sum_{i^c=1}^{l}(1 - e_t^c(i^c))} \qquad \dots\dots\dots\dots(11)$$

$$w_t^c(i^c) = (1 - \alpha)w_{t-1}^c(i^c) + \alpha\tilde{w}_t^c(i^c) \qquad \dots\dots\dots\dots(12)$$

When a function b(u) of mapping a pixel u=(x,y) into a bin index I=($i^R,i^G,i^B$) is given, the object tracking apparatus may use weight $w_t^c(i^c)$ to acquire a final classification result from three bin classification results of the R, G, and B histograms.

The object tracking apparatus may classify pixels of candidate areas by using the new target tracking-object histogram and background histogram generated by a weight sum of the three channels based on an acquired weighted log likelihood ratio in Step S905. Equation (13) is the weighted log likelihood ratio.

$$R_t(I) = R_t^R(i^R) + R_t^G(i^G) + R_t^B(i^B) \qquad \dots\dots\dots\dots..(13)$$

In Equation (13), $R_t^c(i^c)$ may satisfy a relation in Equation (14).

$$R_t^c(i^c) = w_t^c(i^c)L_t^c(i^c) \qquad \dots\dots\dots\dots\dots(14)$$

Further, the object tracking apparatus determines reliable data of the target tracking-object and the background by distinguishing the classified pixel sets in Step S906. At this time, a pixel having a positive function value in $\overline{O}_t$ and a pixel having a negative function value in $\overline{B}_t$ are selected as pixels having reliable data, and sets thereof correspond to $\overline{O}_{t+1}$ and $\overline{B}_{t+1,}$ respectively. A relation between them is expressed as Equation (15).

$$\bar{O}_{t+1} = \{\mathbf{u} | R_t(b(\mathbf{u})) > 0 \ \text{and} \ \mathbf{u} \in \bar{O}_t\}$$
$$\bar{B}_{t+1} = \{\mathbf{u} | R_t(b(\mathbf{u})) < 0 \ \text{and} \ \mathbf{u} \in \bar{B}_t\}. \quad \dots\dots\dots\dots (15)$$

The object tracking apparatus may iterate the above-described process in Step S907, and may stop iterating the process when an increasing rate of a classification ability is smaller than a preset threshold in Step S907-Y. The threshold is defined in association with a variance of the histogram.

Equation (16) defines variance of the weighted log likelihood $R^c(i^c)$ according to the present invention.

$$var^c(R^c; a) = E[(R^c(i^c))^2] - (E[R^c(i^c)])^2$$
$$= \sum_{i^c} a(i^c)[R^c(i^c)]^2 - [\sum_{i^c} a(i^c)R^c(i^c)]^2. \quad \dots\dots(16)$$

Accordingly, a Variance Ratio, $VR^c_t$ of $R^c_t(i^c)$ in c for each color is defined as Equation (17).

$$VR^c_t(R^c_t; p^c_t, q^c_t) = \frac{var(R^c; (p^c_t + q^c_t)/2)}{var(R^c_t; p^c_t) + var(R^c_t; q^c_t)} \quad \dots\dots\dots (17)$$

As a result, a total VR value of $R_t(i^R, i^G, i^B)$ is defined as Equation (18).

$$VR_t(R_t; p_t, q_t) = \sum_{c \in R, G, B} VR^c_t(R^c_t; p^c_t, q^c_t) \quad \dots\dots\dots(18)$$

Equation (18) corresponds to a scale of measuring separability between two histograms. Accordingly, convergence of a value of Equation (18) on a particular value through maximization of the value may mean that a separation ability between the target tracking-object and the background converges.

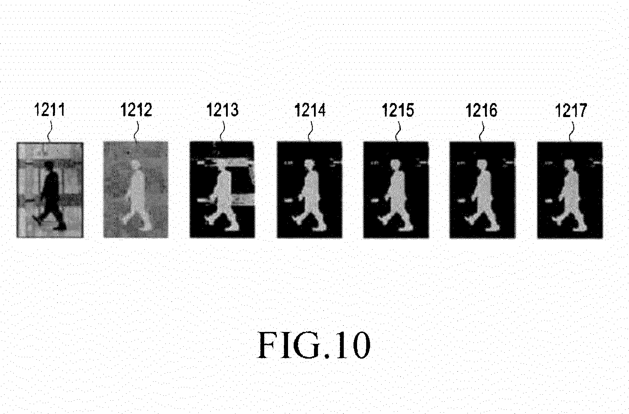

FIG. 10 illustrates diagrams 1212 to 1217 illustrating a process of iteratively selecting reliable data by the object tracking apparatus according to an embodiment of the present invention and a classification result thereof. The number of times that the reliable data is iteratively selected increases in a direction from a left side to a right side of FIG. 10. As illustrated in FIG. 10, as the reliable data is iteratively selected, the target tracking-object is more clearly distinguished.

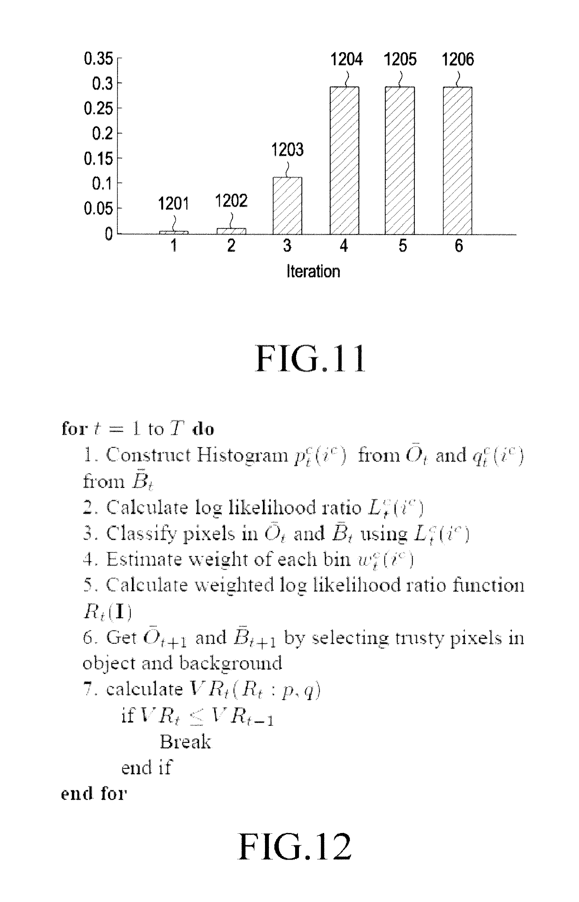

FIG. 11 is a VR value corresponding to each of the diagrams 1212 to 1217 of FIG. 10. As evident in FIG. 11, range fluctuation largely decreases after four or more repetitions.

FIG. 12 illustrates a code for iteratively selecting reliable data according to an embodiment of the present invention.

While the present invention has been shown and described with reference to various embodiments thereof, it will be understood by those skilled in the art that various changes in form and details may be made therein without departing from the spirit and scope of the present invention as defined by the appended claims.

**Claims**

1. A control method of an object tracking apparatus for tracking a target tracking-object, the control method comprising:

   receiving a first frame including the target tracking-object;
   distinguishing between the target tracking-object and a background in the first frame;
   generating histograms of color values for the target tracking-object and the background;
   comparing the histograms corresponding to the target tracking-object and the background to determine reliable data of the target tracking-object and reliable data of the background; and
   estimating a next position of the target tracking-object in a second frame based on the reliable data of the target tracking-object and the background.

2. The control method of claim 1, wherein estimating the next position of the target tracking-object comprises:

   applying a particle filter to the second frame to determine a candidate area; and
   comparing the candidate area with the target tracking-object in the first frame based on the reliable data of the target tracking-object to determine similarity.

3. The control method of claim 2, further comprising determining whether the target tracking-object in the second frame is hidden by another object.

4. The control method of claim 3, wherein, when it is determined that the target tracking-object in the second frame is hidden by another object, the next position of the target tracking-object is estimated by expanding a particle filter application search area in the second frame.

5. The control method of claim 3, wherein, when it is determined that the target tracking-object in the second frame is not hidden by another object, updating the reliable data.

6. The control method of claim 1, further comprising storing next position information of the target tracking-object in the second frame.

7. The control method of claim 1, wherein distinguishing between the target tracking-object and the background in the first frame comprises:

   reading a target tracking-object template; and
   comparing the target tracking-object template with the first frame to determine the target tracking-object.

8. The control method of claim 1, wherein determining the reliable data of the target tracking-object and the reliable data of the background is represented by:

$$L(i) = \log \frac{\max[p(i), \delta]}{\max[q(i), \delta]},$$

where P(i) denotes an i$^{th}$ bin of a target tracking-object histogram, q(i) denotes an i$^{th}$ bin of a background histogram, and $\delta$ denotes a preset value for preventing a value within a log function from being "0".

9. The control method of claim 1, wherein determining the reliable data of the target tracking-object and the reliable data of the background is iteratively applied until a separation degree between a target tracking-object histogram and a background histogram is equal to or larger than a preset value.

10. The control method of claim 1, wherein distinguishing between the target tracking-object and the background in the first frame and generating the histograms of the color values for the target tracking-object and the background are performed for each of R, G, and B channels.

11. The control method of claim 10, wherein determining the reliable data of the target tracking-object and the reliable data of the background is based on a sum of log likelihood functions of the R, G, and B channels.

12. The control method of claim 11, wherein determining the reliable data of the target tracking-object and the reliable data of the background comprises applying a weight to each of the log likelihood functions of the R, G, and B channels.

13. The control method of claim 12, wherein the weight is based on an error rate related to misclassification of the target tracking-object in each of the R, G, and B channels.

14. An object tracking apparatus for tracking a target tracking-object, comprising:

a photographing unit for photographing a first frame including the target tracking-object and a second frame; and a controller for distinguishing between a target tracking-object and a background in the first frame, generating histograms of color values for the target tracking-object and the background, comparing the histograms corresponding to the target tracking-object and the background to determine reliable data of the target tracking-object and reliable data of the background, and estimating a next position of the target tracking-object in the second frame based on the reliable data of the target tracking-object and the background.

15. The object tracking apparatus of claim 14, wherein the controller applies a particle filter to the second frame to determine a candidate area, and compares the candidate area with the target tracking-object in the first frame based on the reliable data of the target tracking-object to determine similarity.

```
                         ┌──────────┐
                         │  START   │
                         └────┬─────┘
                              ▼
                    ┌───────────────────┐
                    │   INPUT IMAGE     │──── S101
                    └─────────┬─────────┘
                              ▼
                         S102
                    ╱──────────────╲        YES
              ┌────<  IS OBJECT HIDDEN? >──────────────────┐
              │     ╲──────────────╱                       │
              │            │ NO                            │
              │            ▼                               ▼
              │  ┌───────────────────┐        ┌────────────────────┐
              │  │ UPDATE MODEL BY    │        │ EXPAND SEARCH AREA │── S106
              │  │ USING FEATURE      │── S103 └──────────┬─────────┘
              │  │ SELECTION          │                   │
              │  └─────────┬─────────┘                    │
              │            ▼                              │
              │  ┌───────────────────┐── S104             │
              │  │ ESTIMATE NEXT      │◄──────────────────┘
              │  │ POSITION           │
              │  └─────────┬─────────┘
              │            ▼
              │  ┌───────────────────┐
              │  │ STORE ESTIMATED    │── S105
              │  │ AREA               │
              │  └─────────┬─────────┘
              │            ▼
              │        S107
              │    ╱──────────────╲
              │   ╱  IS PROCESS     ╲
         NO   └──<  PERFORMED FOR     >
                  ╲  ALL IMAGES?     ╱
                   ╲──────────────╱
                          │ YES
                          ▼
                    ┌──────────┐
                    │   END    │
                    └──────────┘
```

# FIG.1

template

FIG.2A

— 201

— 203

— 204

205    206

FIG.2B

FIG.3A

FIG.3B

400

410 420

PHOTOGRAPHING
UNIT

CONTROLLER

430

STORAGE
UNIT

# FIG.4

START

INPUT IMAGE — S501

DETECT OBJECT PIXEL FROM INPUT IMAGE — S502

DETERMINE FEATURE HISTOGRAMS OF OBJECT AND BACKGROUND — S503

APPLY WEIGHT TO LIKELIHOOD FUNCTION — S504

SEPARATE OBJECT FROM BACKGROUND — S505

END

# FIG.5

602

603

601

# FIG.6

FIG.7A

p(i)

a b c d e

FIG.7B

q(i)

a b c d e

FIG.7C

a b c d e

FIG.8A

R

OBJECT

BACKGROUND

1    2    3    4    5

FIG.8B

G

OBJECT

BACKGROUND

B

. . . . . .          . . . . . .

```
                    ┌─────────┐
                    │  START  │
                    └─────────┘
                         │
                         ▼
          ┌──────────────────────────┐
          │       INPUT IMAGE        │ ── S901
          └──────────────────────────┘
                         │
                         ▼
          ┌──────────────────────────┐
          │   DETECT OBJECT PIXEL     │ ── S902
          │    FROM INPUT IMAGE       │
          └──────────────────────────┘
                         │
                         ▼
          ┌──────────────────────────┐
          │ DETERMINE RGB HISTOGRAMS  │ ── S903
          │  OF OBJECT AND BACKGROUND │
          └──────────────────────────┘
                         │
                         ▼
          ┌──────────────────────────┐
          │    ASSIGN WEIGHT FOR BINS │ ── S904
          │   OF R, G, AND B CHANNELS │
          └──────────────────────────┘
                         │
                         ▼
          ┌──────────────────────────┐
          │  CLASSIFY PIXELS BY USING │ ── S905
          │  WEIGHT SUM OF LIKELIHOOD │◄──────────────┐
          │   OF HISTOGRAM FOR EACH   │               │
          │          CHANNEL          │               │
          └──────────────────────────┘               │
                         │                            │
                         ▼                   ┌────────────────┐
          ┌──────────────────────────┐       │  UPDATE WEIGHT │ ── S908
          │  DISTINGUISH CLASSIFIED   │── S906 └────────────────┘
          │       PIXEL SETS          │               ▲
          └──────────────────────────┘               │
                         │        S907                │
                         ▼                            │
                  ╱────────────╲      NO              │
                 ╱ IS CONVERGENCE ╲────────────────────┘
                 ╲ CONDITION      ╱
                  ╲ SATISFIED?   ╱
                   ╲────────────╱
                         │ YES
                         ▼
                    ┌─────────┐
                    │   END   │
                    └─────────┘
```

# FIG.9

FIG.10

# FIG.11

**for** $t = 1$ to $T$ **do**

   1. Construct Histogram $p_t^c(i^c)$ from $\bar{O}_t$ and $q_t^c(i^c)$ from $\bar{B}_t$

   2. Calculate log likelihood ratio $L_t^c(i^c)$

   3. Classify pixels in $\bar{O}_t$ and $\bar{B}_t$ using $L_t^c(i^c)$

   4. Estimate weight of each bin $w_t^c(i^c)$

   5. Calculate weighted log likelihood ratio function $R_t(\mathbf{I})$

   6. Get $\bar{O}_{t+1}$ and $\bar{B}_{t+1}$ by selecting trusty pixels in object and background

   7. calculate $VR_t(R_t : p, q)$

      **if** $VR_t \le VR_{t-1}$

         Break

      **end if**

**end for**

# FIG.12

Europäisches
Patentamt

European
Patent Office

Office européen
des brevets

**EUROPEAN SEARCH REPORT**

Application Number

EP 13 15 4693

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | COLLINS R T ET AL: "Online selection of discriminative tracking features", TRANSACTIONS ON PATTERN ANALYSIS AND MACHINE INTELLIGENCE, IEEE, PISCATAWAY, USA, vol. 27, no. 10, 1 October 2005 (2005-10-01), pages 1631-1643, XP002420898, ISSN: 0162-8828, DOI: 10.1109/TPAMI.2005.205 | 1,6-14 | INV. G06T7/20 |
| Y | * section 3; figures 2,3,5 * | 2-5,15 | |
| Y | KATJA NUMMIARO ET AL: "An adaptive color-based particle filter", IMAGE AND VISION COMPUTING, vol. 21, no. 1, 1 January 2003 (2003-01-01), pages 99-110, XP055039583, ISSN: 0262-8856, DOI: 10.1016/S0262-8856(02)00129-4 * section 5. * | 2-5,15 | |
| X | HWANN-TZONG CHEN ET AL: "Probabilistic tracking with adaptive feature selection", PATTERN RECOGNITION, 2004. ICPR 2004. PROCEEDINGS OF THE 17TH INTERNAT IONAL CONFERENCE ON CAMBRIDGE, UK AUG. 23-26, 2004, PISCATAWAY, NJ, USA,IEEE, LOS ALAMITOS, CA, USA, vol. 2, 23 August 2004 (2004-08-23), pages 736-739, XP010724497, DOI: 10.1109/ICPR.2004.1334364 ISBN: 978-0-7695-2128-2 | 1,2,6,7, 14,15 | TECHNICAL FIELDS SEARCHED (IPC) G06T |
| Y | * section 3.2; algorithm 1 * | 3-5 | |

-/--

The present search report has been drawn up for all claims

| Place of search | Date of completion of the search | Examiner |
|---|---|---|
| Munich | 3 June 2013 | Krawczyk, Grzegorz |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## EUROPEAN SEARCH REPORT

**Application Number**

EP 13 15 4693

Europäisches Patentamt
European Patent Office
Office européen des brevets

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LINGFENG WANG ET AL: "MEAN-shift tracking algorithm with weight fusion strategy", IMAGE PROCESSING (ICIP), 2011 18TH IEEE INTERNATIONAL CONFERENCE ON, IEEE, 11 September 2011 (2011-09-11), pages 473-476, XP032080535, DOI: 10.1109/ICIP.2011.6116554 ISBN: 978-1-4577-1304-0 * the whole document * | 1-15 | |
| A | PEREZ P ET AL: "Color Based Probabilistic Tracking", EUROPEAN CONFERENCE ON COMPUTER VISION, BERLIN, DE, 27 May 2002 (2002-05-27), pages 661-675, XP002328867, * the whole document * | 1-15 | |
| A | GUILAN FENG: "An efficient multi-cue fusion based sequential monte carlo method for image sequence-based tracking", ELECTRONICS AND OPTOELECTRONICS (ICEOE), 2011 INTERNATIONAL CONFERENCE ON, IEEE, 29 July 2011 (2011-07-29), pages V1-51, XP032051544, DOI: 10.1109/ICEOE.2011.6013044 ISBN: 978-1-61284-275-2 * section IV * | 1-15 | **TECHNICAL FIELDS SEARCHED (IPC)** |

-/--

The present search report has been drawn up for all claims

| Place of search | Date of completion of the search | Examiner |
|---|---|---|
| Munich | 3 June 2013 | Krawczyk, Grzegorz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

## EUROPEAN SEARCH REPORT

Application Number

EP 13 15 4693

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JACQUOT A ET AL: "Adaptive Tracking of Non-Rigid Objects Based on Color Histograms and Automatic Parameter Selection", 2005 SEVENTH IEEE WORKSHOPS ON APPLICATIONS OF COMPUTER VISION (WACV/MOTION'05) - 5-7 JAN. 2005 - BRECKENRIDGE, CO, USA, IEEE, LOS ALAMITOS, CALIF., USA, 1 January 2005 (2005-01-01), pages 103-109, XP031059154, DOI: 10.1109/ACVMOT.2005.19 ISBN: 978-0-7695-2271-5 * the whole document * | 1-15 | |
| A | YASIR SALIH ET AL: "Comparison of stochastic filtering methods for 3D tracking", PATTERN RECOGNITION, vol. 44, no. 10-11, 1 October 2011 (2011-10-01), pages 2711-2737, XP055053479, ISSN: 0031-3203, DOI: 10.1016/j.patcog.2011.03.027 * the whole document * | 1-15 | TECHNICAL FIELDS SEARCHED (IPC) |

The present search report has been drawn up for all claims

| Place of search | Date of completion of the search | Examiner |
|---|---|---|
| Munich | 3 June 2013 | Krawczyk, Grzegorz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)